# EUROPEAN PATENT APPLICATION

(11) **EP 0 745 963 A1**
(43) Date of publication of application: **04.12.1996**
(21) Application number: 95941832.8
(22) Date of filing: 20.12.1995
(51) Int. Cl.: G08C 21/00

(54) **METHOD OF TRANSMITTING AND RECEIVING HAND-WRITTEN IMAGE AND APPARATUS FOR COMMUNICATION IN WRITING**

(30) Priority: 20.12.1994 JP 316846/94; 20.12.1994 JP 15692/94 U
(71) Applicant: SUZUKI MFG CO., LTD., Ibaraki-Pref 311-12 (JP); Norimura, Hiroshi, Tokyo 164 (JP)
(72) Inventor: NORIMURA, Hiroshi, Brighton Corporation, Nakano-ku, Tokyo 164 (JP)
(74) Representative: Grünecker, Kinkeldey, Stockmair & Schwanhäusser Anwaltssozietät
(86) International application number: JP9502617
(87) International publication number: WO9619784

(57) **Abstract**

A device for communicating in writing comprising a touch panel controller 18 for reading X.Y axes of a touch panel 14 placed on an LCD 12 at 15 msec, converting a current dot position made by a writing pen 11 on the X.Y axes into 20 bits ( 10 bits of the X axis, 10 bits of the Y axis )based on a resolution ( 1024×1024 ) of the touch panel 14 to output the dots; an LCD controller 16 for lighting the dot of the LCD 12 corresponding to the dot position at every time when the dot position on the X.Y axes of the LCD 12 is input; a writing communication operating section 22 for comparing the current dot position output from the touch panel controller 18 and the previous dot position, and when both of the dot positions are not adjacent to each other, the writing communication operating section 22 outputs the current dot position as a starting point of a drawing by 20 bits of a first bit string as they are, and when the dot positions are determined adjacent to each other, converts the deviation per one dot of both dot positions to a second bit string of less than 4 bits; and a communication controlling section 25 for data communicating of the first or the second bit string according to predetermined communication rules, thereby to transmit an image data of the drawing made by an input pen to a receiving party in real time.

## Description

### TECHNICAL FIELD

This invention relates to a method for transmitting and receiving a hand-written image and a device for communicating in writing capable of sampling an image following a drawing made by an input pen at position input means at an interval of a predetermined time to transmit the hand-written image in real time to a receiving party and also displaying an image made by an input pen of the receiving party in real time.

### BACKGROUND ART

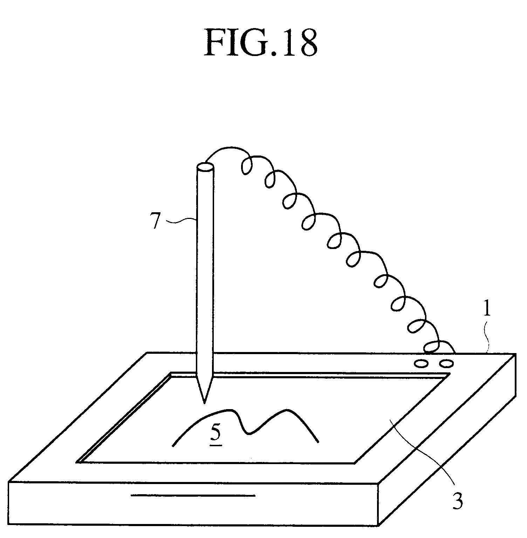

FIG. 18 shows an appearance of a conventional device for transmitting and receiving a hand-written image. The conventional device 1 for transmitting and receiving the hand-written image is adopted to store and transmit the data in such manner that when a figure or a character ( hereinafter generally called image data ) is drawn or written by an input pen 7 on a touch panel 5 placed on an LCD 3, a dot coordinates value of an X-axis and a Y-axis ( hereinafter called the absolute coordinates ) on the touch panel 5 is stored, and after the stored data are fully stored for one screen, the data are transmitted sequentially.

For example, when the touch panel 5 comprises a dot array of X.Y coordinate axes consisting 480 dots X-axis and the 640 dots Y-axis, and wherein values of the absolute coordinates of the image data (Yₒ, Xₒ), (Y₁, X₁), (Y₅, X₅)... are (98, 50), (95, 55), (80, 60)..., these values are temporally stored therein. At the time of transmitting, the data per one screen are transmitted sequentially to the receiving party.

With this transmission method, binary data based on the absolute coordinates on the touch panel such as (98, 50; 01100010, 00110010), (95, 55; 0101111, 00110111) ... (80, 60; 01010000, 00111100) are transmitted directly.

Further, in such a device for transmitting and receiving the hand-written image, there is a differential system. This differential system is for sampling the absolute coordinates of the touch panel at an interval of a predetermined time, and obtaining a difference between the current dot position data indicating a tracing of the input pen and the previous absolute coordinates of the dots, thereby to transmit the difference ( vector ) in the form of binary.

In addition, there is a telephone developed for deaf-and-dumb persons. Such a telephone has a function for visibly displaying a dial tone, a calling tone and a busy tone etc. and is capable of communicating by handwriting by using the stored system as described above.

However, the transmitting speed for the data transmission via a telephone line, is generally set to either 24400 bps, 19200 bps, 4800 bps, or 2400 bps.

In other words, at the transmission speed of 24400 bps, when the absolute coordinates are transmitted in the form of binary data as in a conventional manner, the transmission can be made by following the tracing of the drawing made by the input pen, but when the transmission speed is in the order of 2400 bps, the transmission can not be made by following the tracing of the drawing made by the input pen. For example, a display unit which has an X-axis of 640 dots and a Y-axis of 400 dots requires about 10 bits for both the X and Y axes to display 1 dot in the absolute coordinates.

Consequently, in the conventional transmitting manner, the dot coordinates value of the image data drawn by the input pen on the touch panel is scanned to read and put in the binary form to be sequentially sent, and as a result the data to be transmitted is in enormous quantities . Namely, the image can not be transmitted to the receiving party in real time when the image is written by the figure or the character.

Accordingly, there is a problem that the image data following the drawing made by the input pen at the transmission's side can not be transmitted to the receiving party in real time.

Further, the conventional differential system is for sampling at every predetermined time the tracing of the input pen, obtaining the difference of previous absolute coordinates and current absolute coordinates to transmit the difference ( vector ) in the form of binary data. For this reason, when the speed of the writing drawing is increased, the difference becomes greater accordingly, resulting in causing an error between the hand-written image displayed at the receiver's side and that of the transmitter's side.

Furthermore, with the conventional telephone for deaf-and-dumb persons, the dot coordinates value on the touch panel drawn by the input pen is scanned, read and stored. The binary data of one screen are sequentially sent after the data per one screen are stored. Thus, it is not possible to transmit the image data in real time to the receiving party. There is a problem that it lacks usefulness from the viewpoint of communicating in writing.

The present invention is made to solve the problems as described above. It is therefore an object of the invention to provide a method for transmitting and receiving a hand-written image and a device for communicating in writing, which is capable of transmitting an image data following a drawing on a screen by an input pen in real time, and also displaying an image data made by drawing by a receiver.

### DISCLOSURE OF INVENTION

The gist of Claim 1 comprises the following steps of: converting a current dot position data at a pen point of X.Y axes in position input means placed on a display unit into a first bit string based on a resolution of said position input means; determining whether or not the current dot position data and a previous dot position data are adjacent to each other, directly transmitting the first bit string to a receiving party as a starting point of a drawing of the current dot position data when it is determined that both dot position data are not adjacent to each other; determining a deviation per 1 bit between the previous dot position data and the current dot position data when it is determined that they are adjacent to each other and converting the deviation into a second bit string having less than 4 bits to be transmitted to the receiving party; and storing the current dot position data as the previous dot position data after determining the adjacency.

By these steps, the dot position data of the X.Y axes in position input means drawn by the input pen is read at every predetermined time, and it is determined whether or not the dot position data is adjacent to the previous dot position data. When the current dot position data is not adjacent, the first bit string is directly transmitted as the starting point of the coordinates. When they are adjacent to each other, the current dot position data is converted into the second bit string having less than 4 bits indicating the deviation per dot.

Accordingly, it is possible to transmit the image data to the receiving party in real time following the drawing made by the input pen.

The gist of Claim 2 comprises the following steps of: determining whether the data is the first bit string or the second bit string when data from the transmitting party is received; converting the data, when the data is determined as the first bit string, into a third bit string based on the resolution of the display unit, and lighting dots corresponding to the X.Y axes of the display unit; lighting the dots of the X.Y axes of the display unit corresponding to a bit string consisting of the second bit string and the third bit string of the previous time added together, when it is determined that the data received is the second bit string; and storing the third bit string or the bit string of the third bit string added to the second bit string as the previous dot position in the display unit. By these steps, when it is determined as data of the first bit string, the data is converted into the third bit string based on the resolution of the display unit to light the dots corresponding to the X.Y axes of the display unit, therefore it is possible to indicate the dots of the display unit corresponding to the dot position data following the drawing of the receiver's input pen. When it is determined as the second bit string indicating the deviation per 1 dot, the bit string and the third string are added together. Therefore it is possible to light dots of the X.Y axes of the display unit following the drawing made by the receiver's input pen.

The gist of Claim 3 comprises: a panel controller for reading the X.Y axes of position input means placed on the display unit at every predetermined time, for converting a current dot position data at the pen point of X.Y axes into the first bit string based on the resolution of the position input means to be output; a writing communication operating section for comparing the current dot position data output from the panel controller with a previous dot position data, and directly outputting the first bit string as the starting point of the drawing when both dot position data are determined they are not adjacent to each other, and for converting the deviation per 1 dot of both dot position data into the second bit string having less than 4 bits when both dots are determined as adjacent to each other; and a communication controlling section for communicating the first or the second bit string data according to the communication rules. Accordingly, the dot position data of the X.Y axes of the position input means drawn by the input pen are read at every predetermined time and the adjacency of the current dot position is determined. When the current dot position data is not adjacent, the first bit string is transmitted as the starting point of the coordinates. When it is determined that they are adjacent to each other, the current dot position data is converted into the second bit string having less than 4 bits of the deviation per 1 dot to be transmitted to the receiving party.

Therefore, it is possible for the device to transmit the image data to the receiving party in real time following the drawing made by the input pen.

The gist of Claim 4 has the device for communicating in writing, wherein a current dot position data is stored as a previous dot position data when the determination of the adjacency is completed. The current dot position data after completing the determination of the adjacency is stored as the previous dot position. The current dot position data can be always compared with the previous dot position data.

The gist of Claim 5 comprises: a display unit controller for lighting dots of the display unit corresponding to the dot position at every time when dot position data of the X.Y axes of the display unit is input therein; and a writing communication operating section for outputting dot position data converted into the third bit string based on the resolution of the display unit to the display unit controller when data received from the communication controlling section is determined as the data of the first bit string, for making two's -complement operation with respect to the second bit string when the data is determined as the second bit string, and for lighting the dots on the X.Y axes of the display unit corresponding to a bit string consisting of the third bit string of the previous time added to the bit string after two's-complement operation. Accordingly, the data following the drawing made by the input pen is put in the form of the bit string having less than 4 bits based on the resolution of the display unit to be added together.

The gist of Claim 6 has the device for communicating in handwriting, for storing the third bit string or a bit string consisting of the third bit string with as addition of the second bit string after complement operation thereof. Accordingly, a previous dot position data can be compared by the resolution of the display unit.

The gist of Claim 7 has the writing conversation operating section comprising: a matrix table having a grid area group consisting of three areas for an X-axis and three area for a Y-axis; a conversion table provided to be corresponding to the matrix table, having the center grid area which is the reference point of 4 bit or 3 bits, and having the grid area group where positions of other grid areas with respect to the reference point are written in the form of the second bit string indicating 4 bits or 3 bits of the deviation per 1 dot; a dot position setting unit for writing the dot position data as the first bit string to the center of grid area of the matrix table at every time when a current dot position data is input, for writing adjacent coordinates of the current dot position data to other grid areas, and for setting a flag in the grid area of the conversion table corresponding to the current dot position data; an adjacent determining unit for determining the adjacency based on the current dot position data of the matrix table at each time when the current dot position data is input, and outputting the current dot position data in the form of the first bit string when the adjacency is not determined; and a dot coordinates output unit for reading the second bit string in the grid area to be output at every time when the flag is set in the conversion table.

Accordingly, each time when a current dot position data is input, a previous dot position data of the matrix table is compared with the current dot position data. The current dot position data is written as the previous dot position data to the center of grid area of the matrix table, and other grid areas are set as the adjacent coordinates of the current dot position data. It is determined whether or not the current dot position data is adjacent based on the previous dot position data of the matrix table at every time when the current dot position data is input. When it is determined as not adjacent, the current dot position data is output in the form of the first bit string.

At every time when the flag is set in the conversion table, the second bit string in the grid area is read to be output.

Accordingly, when determined as adjacent to each other, 4 bits data for per 1 dots is transmitted, therefore, it is possible to transmit in real time data following the drawing made by the input pen even in a slow line speed.

The gist of Claim 8 comprises the writing conversation operating section which has the serial converting section for converting data transmitted to the communicating control section into the serial data.

Even if this device is connected to the telephone line, it is possible to transmit in real time the data following the drawing made by the input pen.

### BRIEF DESCRIPTION OF DRAWINGS

FIG. 1 is a schematic structural view explaining a concept of the present invention;
FIG. 2 is an explanatory view of a matrix table;
FIGS. 3A and 3B are explanatory views of the absolute coordinates written in matrix tables;
FIG. 4 is an explanatory view of a value of 4 bits of a conversion table;
FIG. 5 is an explanatory view of a relationship between a matrix table and a conversion table;
FIG. 6 is an explanatory view of an operation of the present invention;
FIG. 7 is an explanatory view of an update of a matrix table following a drawing;
FIG. 8 is an explanatory view showing a display at a transmitter's side and a receiver's side of the present invention;
FIG. 9 is a specific structural view of the present invention;
FIG. 10 is a specific structural view showing a writing conversation operating section;
FIG. 11 is a perspective view showing an example of a connection of the present invention;
FIG. 12 is an explanatory view of a calling screen;
FIG. 13 is an explanatory view of a writing conversation screen;
FIG. 14 is a flow chart explaining a transmitting data processing;
FIG. 15 is a flow chart explaining a receiving data processing;
FIGS. 16A and 16B are explanatory views of a conversion table of 3 bits;
FIG. 17 is a perspective view showing an example of connecting the device with a telephone or a facsimile machine; and
FIG. 18 is a perspective view of a conventional device for transmitting and receiving a hand-written image.

### BEST MODE FOR CARRYING OUT THE INVENTION

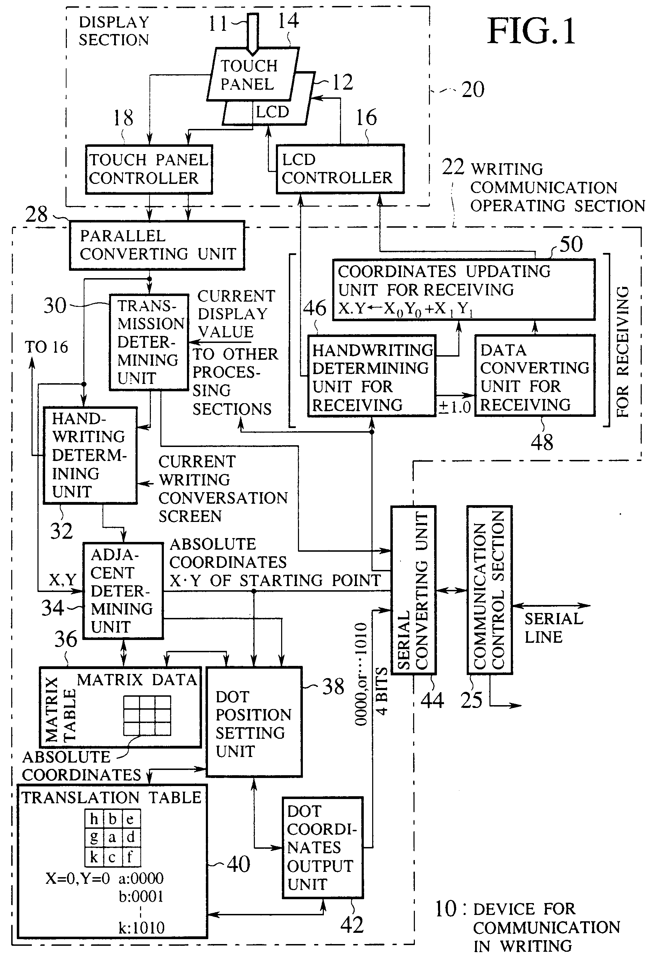

FIG. 1 schematically shows a structure of an embodiment according to this invention. As shown in FIG. 1, a device 10 for communicating in writing ,which is a portable device, comprises a display section 20, a writing communication operating section 22, and a communication control section 25. The display section 20 includes a stylus pen 11, a touch panel 14 placed on an LCD 12, an LCD controller 16, and a touch panel controller 18. The LCD controller 16 displays a predetermined display screen transmitted from the writing communication operating section 22 on the LCD 12.

When dot coordinates indicating the dot position of the absolute coordinates axes of the touch panel 14 are input to the LCD controller 16, the LCD controller 16 drives X·Y electrodes of the LCD 12 corresponding to the input dot coordinates to light the dots ( a plurality of picture elements ).

The touch panel controller 18 scans analog data of the X·Y electrodes of the touch panel 14 at every predetermined time ( within 15 msec ), and the condition of each electrode at this time is converted into a bus cycle of a centronics-type to be made in a bit string of predetermined bit length ( namely, a bit string based on a resolution on the absolute coordinates axes of the touch panel 14 ), and the data of this bit string are output to the writing communication operating section 22.

This writing communication operating section 22 includes a parallel converting unit 28, a transmission determining unit 30, a handwriting determining unit 32, an adjacent determining unit 34, a matrix table 36, a dot position setting unit 38, a conversion table 40, a dot coordinates output unit 42, a serial converting unit 44, a handwriting determining unit 46 for receiving, a data converting unit 48 for receiving, and coordinates updating unit 50 for receiving.

The parallel converting unit 28 performs a conversion of data of the centronics-type from the touch panel controller 18 of the display section 20, thereby to place the data on the system bus.

The transmission determining unit 30 reads the data from the parallel converting unit 28 according to the condition of the current display screen. When the current display screen is processed to be a calling screen which will be explained hereinafter, and the read data indicates a telephone number, the transmission determining unit 30 stores the telephone number and waits for a transmission instruction. Following the transmission instruction, the communication control section 25 is put into a transmission condition, and the stored telephone number is output to the communication control section 25 through the serial converting unit 44 to connect a line with the receiving party.

The handwriting determining unit 32 reads data from the parallel converting unit 28 according to the condition of the current display screen. The current display screen is processed to be a writing conversation screen which will be explained hereinafter. When the dot coordinates of the data are positioned in the writing conversation area, the handwriting determining unit 32 determines the data as a handwriting to activate the adjacent determining unit 34, and further, outputs the dot coordinates of the bit string of predetermined bit length of the handwriting data to the LCD controller 16 as they are, thereby to light the dots of the LCD 12 following a drawing made by the stylus pen 11.

The adjacent determining unit 34 reads the bit string of predetermined bit length from the parallel converting unit 28 as the dot coordinates of the drawing made by the stylus pen 11 on the absolute coordinates axes of the touch panel 14. The adjacent determining unit 34, based on the dot coordinates( hereinafter called current coordinates )and previous dot coordinates ( Xᵢ₋₁, Yᵢ₋₁ ) in a grid area of the center of the matrix table 36, determines whether or not both of these dot coordinates are adjacent to each other.

When adjacent determining unit 34 determines that both of dot coordinates are not adjacent to each other, the adjacent determining unit 34 adds a code to a bit string of predetermined bit length, wherein the code indicates that the current dot coordinates are a starting point of a handwriting, to output the bit string of predetermined bit length to the serial converting unit 44 through the bus line as they are.

Further, when it is determined that both of dot coordinates are adjacent to each other, the adjacent determining unit 34 outputs the bit string of predetermined bit length added a code to the dot position setting unit 38, wherein the code indicates that the dot coordinates are adjacent to the current dot coordinates.

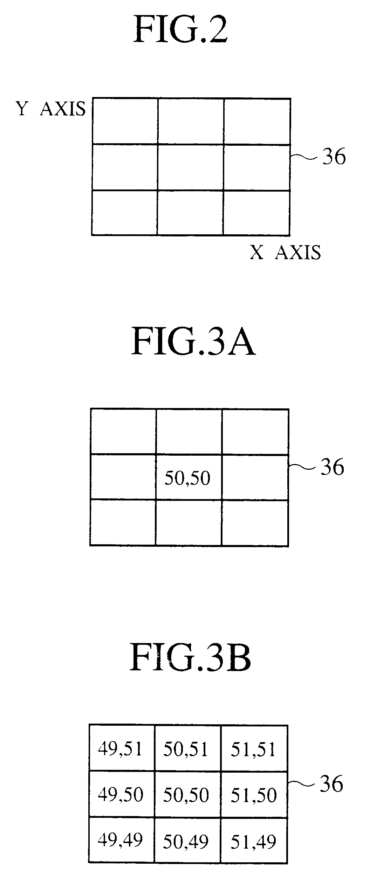

The matrix table 36 is provided to have the grid areas corresponding to the conversion table 40. As shown in FIG. 2, the grid area group composes nine ( 9 ) areas consisting of three areas for the Y-axis and three areas for the X-axis, respectively, for 3 dots.

The dot position setting unit 38 writes the absolute coordinates (Xᵢ, Yᵢ)to the center of grid areas of the matrix table 36, and an adjacent value of the absolute coordinates is written in another grid area in the form of the absolute coordinates, every time when the absolute coordinates (Xᵢ, Yᵢ) of the starting point which is output to the bus line between the adjacent determining unit 34 and the communication controlling section 25 are input to the dot position setting unit 38.

For example, as shown in FIG. 3A, when the absolute coordinates of the starting point from the adjacent determining unit 34 are output as (50, 50), the dot position setting unit 38 writes the coordinates (50, 50)to the center of the matrix table 36.

As shown in FIG. 3B, the adjacent values of the absolute coordinates is written in other grid areas making the matrix table 36 indicating the previous dot coordinates.

When the adjacent dot coordinates( hereinafter called "the adjacent absolute coordinates" )are input, the dot position setting unit 38 determines the corresponding grid area of the conversion table 40 based on values of the absolute coordinates of each grid area of the matrix table 36, and the grid area of the conversion table 40 is flagged. As explained in FIGS. 3A and 3B, the adjacent absolute coordinates (Xᵢ, Yᵢ)are written in the center grid area of the matrix table 36, and the adjacent values of the adjacent absolute coordinates are written in other grid areas in the form of the absolute coordinates.

Namely, each time when the dot coordinates of the starting point and the adjacent dot coordinates are informed, the matrix table 36 is up-dated.

The conversion table 40 has the grid area group divided into nine areas same as the matrix table 36, a deviation per 1 dot with respect to a reference point **(a)** is stored in each grid in the form of 4 bits.

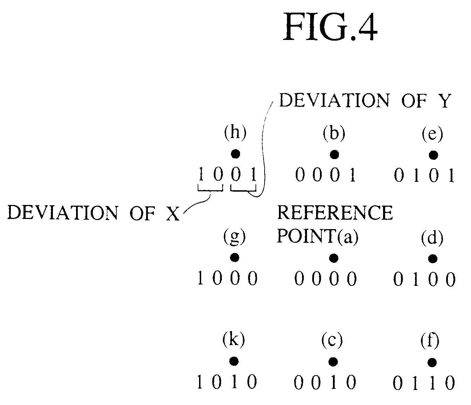

The binary data of 4 bits written in these grid areas will be explained as following. For example, as shown in FIG. 4, the center area **(a)** as the reference point is represented by "0000",a grid area **(b)** is represented by "0001", a grid area **(c)**is represented by "0010", a grid area **(d)** is represented by "0100", a grid area **(e)** is represented by "0101", a grid area **(f)** is represented by "0110", a grid area **(g)** is represented by "1000", a grid area **(h)** is represented by "1001", and a grid area **(k)** is represented by "1010". These binary data are written in the form of 4 bits to the conversion table 40, respectively.

The binary data written to the conversion table 40 are the value indicating the deviation per 1 dot with respect to the previous dot position of the center grid area **(a)** of the matrix table 36.

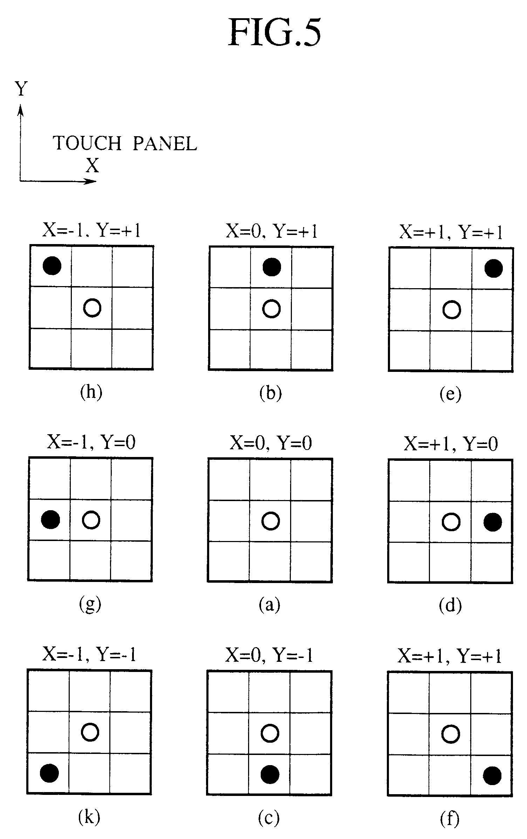

For example, in the case where the previous dot coordinates written to the center gird area **(a)** of the matrix table 36 are represented by (50, 50) and current dot coordinates are represented by (49, 51), the deviations are (X = -1, Y = +1) as shown at **(h)** in FIG. 5 ("●" in FIG. 5). These deviations are represented by "1001" in the form of 4 bits in FIG. 4. Further, when the dot coordinates of this time are (51, 50), the deviations are {X = 0, Y = +1} as shown at **(b)** in FIG. 5. These deviations are represented by "0001" in the form of 4 bits in FIG. 4.

Namely, the binary data of 4 bits as shown in FIG. 4 represent deviations according to the current and previous dot positions which are { X = 0, Y = 0 }, { X = 0, Y = +1 }, { X = 0, Y = -1 }, { X = +1, Y = 0 }, { X = +1, Y = +1 }, { X = +1, Y = -1 }, { X = -1, Y = 0 }, { X = -1, Y = +1 }, and { X = -1 , Y = -1 }, that are stored as "0000", "0001", "0010", "0100", "0101", "0110", "1000", "1001", and "1010".

Further, there are sixteen bit forms represented by 4 bits, however, 4 bits of other forms than the above-mentioned forms are used for a control code. For example, it is used as the control code for updating of one screen( turning over a page ) and for a reply an instruction to an inquiry in a writing conversation.

Especially, when the drawing is continuously made by the stylus pen 11, the deviation per 1 dot is always in the relationship as shown in FIG. 5.

Thus, even when the deviation of this time is represented in the form of 4 bits as shown in FIG. 4, the dot coordinates of the drawing are accurate.

The dot coordinates output unit 42 outputs the binary data of 4 bits of the flagged grid areas to the serial converting unit 44 when the conversion table 40 is flagged by the dot position setting unit 38( position **a**, **b**, ··· of grid areas of the conversion table 40), and the output data are transmitted to the receiving party through the communication control section 25. Thus, it is possible for the position of 1 dot in the form of 4 bits to be transmitted at high speed instead of transmitting the absolute coordinates ( 10 bits of the X-axis, 10 bits of the Y-axis )as in the conventional system.

The handwriting determining unit 46 for receiving reads the data from the serial converting unit 44, and when the read data are transmitted in the form of the dot coordinates of the bit string of predetermined bit length added a code, wherein the code indicates the handwriting, the handwriting determining unit 46 for receiving converts the dot coordinates to the dot position on the absolute axis of the LCD 12, and the converted dot coordinates are output to the LCD controller 16, also outputs them to the coordinates updating unit 50.

Further, when the data from the serial converting unit 44 are transmitted in the form of 4 bits, the handwriting determining unit 46 for receiving outputs them to the data converting unit 48 as coordinates continuously made by the handwriting.

The data converting unit 48 determines whether or not two's-complement operation can be made to the bit string of predetermined bit length of the absolute coordinates of the LCD 12 at every time when the data of 4 bits are input. When the two's-complement operation can be made, the data converting unit 48 outputs the bits to the coordinates updating unit 50 by adding the header-bit by 6 bits.

When the two's-complement operation can not be made, the data converting unit 48 performs a conversion of polarity of the header-bit which will be explained hereinafter, and then outputs the bits to the coordinates updating unit 50 by adding the header-bit by 6 bits.

The coordinates updating unit 50 performs, every time when the binary data of the 4 bits are input, the conversion of the two's-complement and adds them with the previous absolute coordinates to obtain updated absolute coordinates Xᵢ, Yᵢ of the LCD 12. The coordinates updating unit 50 outputs them to the LCD controller 16 as well as stores the absolute coordinates of that LCD 12 as previous absolute coordinates of the LCD 12.

The description will now proceed to the operation of the device 10 for communicating in handwriting having the structure as described above. In this description, the device 10 for communicating in handwriting is set for having the instruction for transmission in the handwriting. In the condition like this, for example, a drawing is made by the stylus pen 11 on the touch panel 14 placed on the LCD 12, the touch panel controller 18 reads current absolute coordinates of the dot with respect to the drawing on the touch panel 14, and the read absolute coordinates are output to the writing communication operating section 22 by the touch panel controller 18.

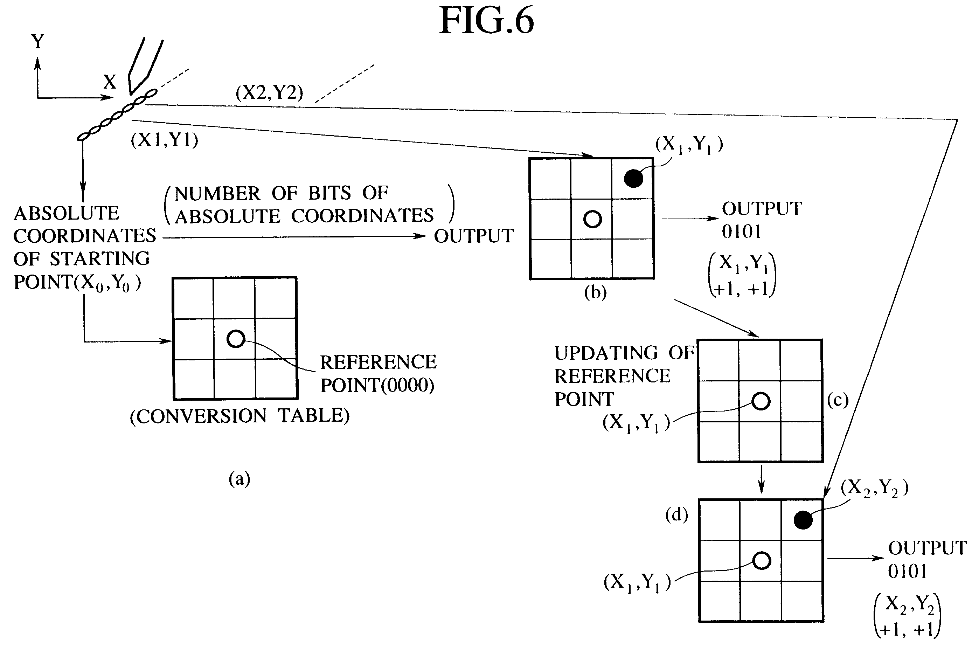

The writing communication operating section 22 compares the previous dot coordinates stored in the center grid area of the matrix table 36 and current dot coordinates by the adjacent determining unit 34, and it is determined whether both of these dot coordinates are adjacent to each other or not. When the dots are not adjacent, as shown at **(a)** in FIG. 6, the data of the bit string of predetermined bit length are output to the receiving party as they are as the absolute coordinates of the starting point (X₀, Y₀) following the drawing made by the stylus pen 11.

At this time, the dot position setting unit 38 reads the absolute coordinates (Xᵢ, Yᵢ)of the starting point output to the bus line, and writes the coordinates of the starting point to the center grid area of the matrix table 36, and the adjacent values of the starting point are written in other grid areas.

For example, as shown in FIG. 3A, the absolute coordinates of the starting point (50, 50) are output from the adjacent determining unit 34, the dot position setting unit 38 writes the starting point (50, 50)to the center of the matrix table 36.

Further, as shown in FIG. 3B, the adjacent values of the absolute coordinates are written in other grid areas to make the matrix table 36 indicate the previous dot coordinates.

When the adjacent absolute coordinates of the adjacent dots are input, the dot position setting unit 38 sets the flag in the grid area of the conversion table 40 corresponding to the matrix table 36, and thereafter the adjacent absolute coordinates (Xᵢ, Yᵢ) are written in the center grid area of the matrix table 36 , and adjacent values of the adjacent absolute coordinates are written in other grid areas in the form of the absolute coordinates.

The dot coordinates output unit 42 extracts the binary data of 4 bits from the flagged grid area of the conversion table 40 to transmit the extracted data to the receiving party.

For example, when the previous dot coordinates are ( Xₒ = 50, Yₒ = 50 )and the current dot coordinates are ( X₁ = 51, Y₁ = 51 ), the dot coordinates output unit 42 extracts the binary data of 4 bits from the grid area **(e)** as shown in FIG. 4 to output the binary data "0101".

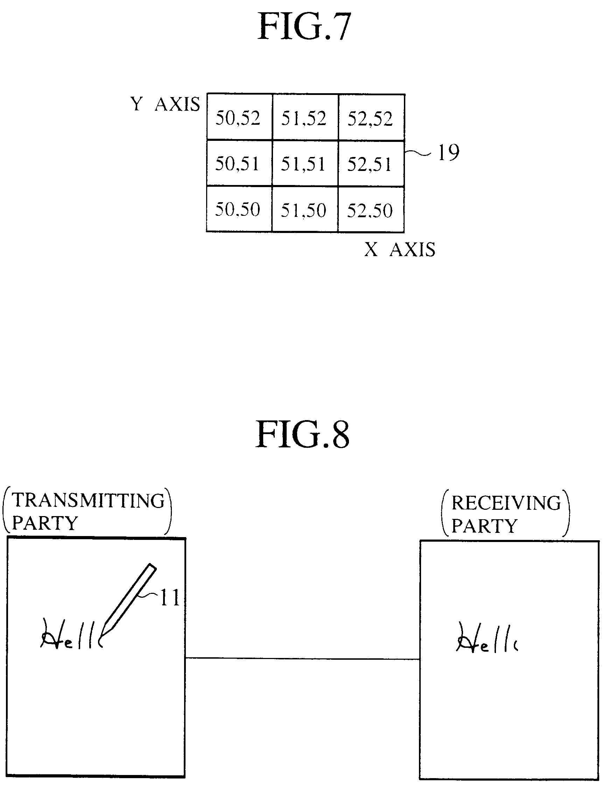

Following the transmission of this binary data, the dot position setting unit 38 as shown at **(c)** in FIG. 6 writes the adjacent absolute coordinates ( X₁ = 51, Y₁ = 51 ) to the center grid area of the matrix table 36, and writes the adjacent values of the adjacent absolute coordinates to other grid areas in the form of the absolute coordinates. Thus, it is provided that the matrix table 36 becomes a matrix table, as shown in FIG. 7, having nine (9) absolute coordinates which (51, 51) being written in the center grid area.

Furthermore, in the writing communication operating section 22, when the next absolute coordinates ( X₂ = 52, Y₂ = 52 )are input, this writing communication operating section 22 compares the current dot coordinate ( X₂ = 52, Y₂ = 52 ) and the previous dot coordinate ( X₁ = 51, Y₁ = 51 ) in the center grid area of the matrix table 36, and it determines whether these dots are adjacent to each other or not.

As explained above, when the dot coordinates are adjacent to each other ( namely, the drawing is continuously made ), the dot position setting unit 38 sets the flag ( indicated as symbol "●" ) to the gird area of conversion table 40 as shown at **(d)** in FIG. 6 corresponding to the coordinates (52, 52) of the matrix table 36, and the adjacent coordinates ( 52, 52 ) are written in the center grid area of the matrix table 36, and the adjacent values of the adjacent absolute coordinates are written in other grid areas in the form of the absolute coordinates.

When this conversion table 40 is flagged, the binary data of 4 bits of the flagged grid area are extracted and transmitted to the receiving party by the dot coordinates output unit 42. In this example, the flagged grid area shown at **(d)** in FIG. 6 is corresponding to **(e)** in FIG. 4, thus, "0101" is transmitted in the same manner as the previous time.

Namely, with the form of the absolute coordinates of 10 bits of the X-axis and 10 bits of the Y-axis, only the starting point following by the drawing is transmitted, and in the subsequent transmission, the deviation per 1 dot formed as 4 bits is transmitted instead of the absolute coordinates. In accordance with this transmission, for example, as shown in FIG. 8, when the transmitting party writes "Hello" on the touch panel 14 by using the stylus pen 11, in the receiving party , the letters "Hello" are displayed at the speed corresponding to the drawing made by the stylus pen 11 in the transmitting party. Therefore, it is possible that the communication between the receiving party and the transmitting party is carried out with the same sense of using the audio. As shown in FIG. 8, when the transmitter has finished writing of the letter "o", writing of the letter "o" at the receiving party is also finished.

The description will now proceed to a receiving process. When the receiving data are received from the transmitting party, the handwriting determining unit 46 determines whether or not the absolute coordinates indicate the handwriting. When the absolute coordinates are determined as the handwriting, the handwriting determining unit 46 converts the absolute coordinates into the resolution of the LCD 12 as the starting point and outputs the converted absolute coordinates to the LCD controller 16 to light the dots of the absolute coordinates of the corresponding LCD 12 and to outputs the absolute coordinates to the coordinates updating unit 50.

Thereafter, when a subsequent data received is a binary data of 4 bits, the data is output to the data converting unit 48 before outputting them to the coordinates updating unit 50.

The data converting unit 48 determines whether or not the data of 4 bits are possible to be added to the absolute coordinates of the LCD 12 by the two's-complement operation, and this process is carried out as following.

For example, with the absolute coordinates of the LCD 12 represented in the form of 10 bits of the X-axis and 10 bits of the Y-axis, and when (+1, +1) is input as "1010", the two's-complement operation is possible to be performed since (+1) is represented as "10". Because of this, after adding 6 bits to the header-bit and making the bit "1111111010", then the processed bits are output to the coordinates updating unit 50.

Further, when a data (1001; - 1, + 1) is input, however, it is not possible to perform that the two's-complement operation simply by adding 6 bits to the header-bit. Therefore, "10" which corresponds to (-1) is replaced with "11" to make "1101", and then a bit string "1111111110" acquired by adding 6 bits to the header-bit is output to the coordinates display update means 50.

Thus, even when the binary data of 4 bits is transmitted to the receiving party as the deviation per 1 dot following the drawing made by the stylus pen 11, the receiving party possibly performs the two's-complement operation as described above to output them to the coordinates updating unit 50 and lights a dot of the LCD 12 corresponding to the absolute coordinate which is acquired by adding a previous absolute coordinate of the LCD 12 and a current absolute coordinate. Therefore, it is possible to perform the display which can follow the dot coordinates of the drawing made by the stylus pen 11 of the transmitting party.

Furthermore, because of the transmission performed in the form of 4 bits, the transmission quantity is remarkably small. Thus even if transmission speed of the line is 2400 bps, the data are transmitted in real time.

Especially, when it is used for the telephone for deaf-and-dumb persons, the image data drawn on the touch panel of the local display section are displayed in the display unit of the telephone for the deaf-and-dumb people in real time.

In the above description, (-1) is represented by "10", however, (-1) may be represented by "11" to be immediately operated by two's-complement operation without converting the data at the time of receiving them.

Further, the matrix table and the conversion table are used in the above description, however, these tables may be used for storing a formula by a well-known chain sign format.

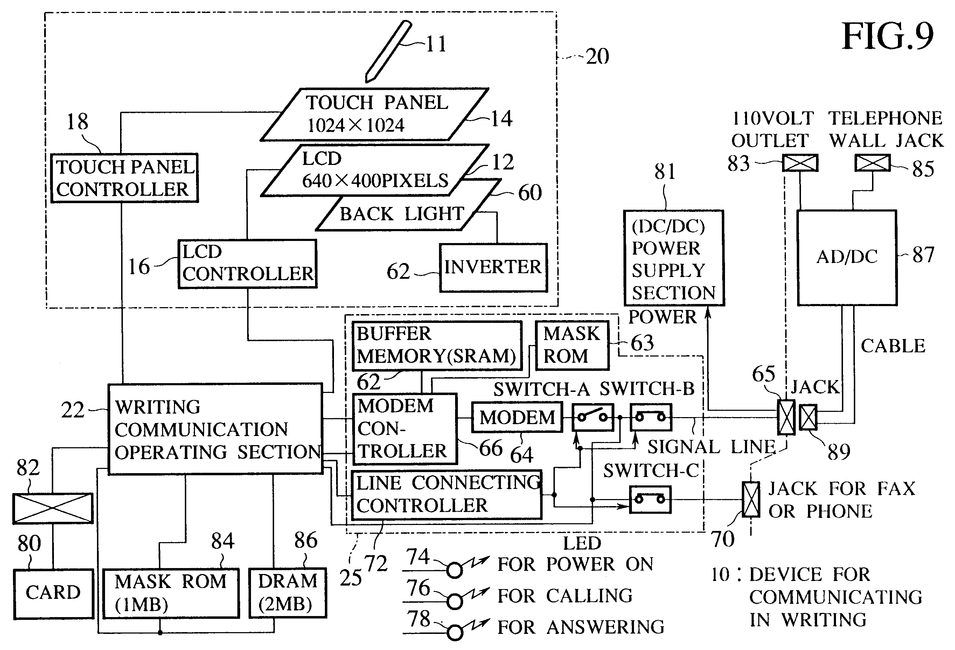

Subsequently, the description will now proceed to the specific structure of the device for communicating in writing. FIG. 9 is a schematic structure view showing the specific example of the device for communicating in writing of this invention. The device 10 for communicating in handwriting as shown in FIG. 9 includes the display section 20 having a back light 60 and an inverter 62. The back light 60 exposes the light from the back side of the LCD 12 indicating by the resolution of 640 × 640, and the inverter 62 supplies a predetermined DC power to the back light 60.

The touch panel 12 included in the display section 20 uses a resistance film system having a resolution of 1024 × 1024. When the resistance film is pushed by the stylus pen 11, the bits corresponding to the dot coordinates are set on the absolute coordinates axis.

The communication controlling section 25, as shown in FIG. 9, includes a buffer memory 62, a modem 64, and a modem controller 66, wherein the modem 64 converts the data for transmitting and receiving to the telephone line. The modem controller 66 controls transferring of the data by the modem 64 or the buffer memory 62 or a serial port 98 described hereinafter, and supports the communication by a communication protocol following the instruction of CCITT stored in ROM 63.

The modem 64 is connected to one side of a hook switch **A** ,and the other side of the hook switch **A** is connected to one side of a line switch **B**. The other side of the line switch **B** is connected to a connector 65 for connecting a public line.

Further, one side of a line switch **C** is connected to the other side of the hook switch **A** and the one side of the line switch **B**, also the other side of this line switch **C** is connected to a connector 70 connected to a facsimile machine or a telephone.

Namely, when these switches are appropriately controlled by a line connecting controller 72, signal transmitted by a public telephone service company can be directly introduced to the existed facsimile machine and/or an audio telephone.

Further, the communication controlling section 25 includes the line connecting controller 72 which controls switches of the hook switch **A**, the line switch **B**, and the line switch **C** following instructions of the writing communication operating section 22.

In the writing communication operating section 22, there are a power LED 74 for informing the supplied power, a calling LED 76 for informing a call, and an absence LED 78 for informing of telephone calls when the receiving party can not answer the phone calls, and these functions are connected thereto.

Furthermore, a card socket 82 for accepting a card 80 of ATA type is connected to the writing communication operating section 22. In this device 10 for communicating in writing, a power supply section 81 is connected to the connector 65 and supplies a predetermined power to each section of the device. The one side of a cable is connected to the connector 65 through a jack 89, and the other side of the cable is connected to a voltage converting section 87 connected to an outlet 83 and a wool jack 85.

On the other hand, a ROM 84 and a RAM 86 are connected to the writing communication operating section 22. The ROM 84, of which capacity is 1 megabyte, stores a BIOS which controls input/output, an OS, and the application software which is made by each unit described above in this invention. The RAM 86, of which capacity is 2 megabytes, is used for a working. For example, the matrix table 36 in FIG. 1 is made in this RAM 86.

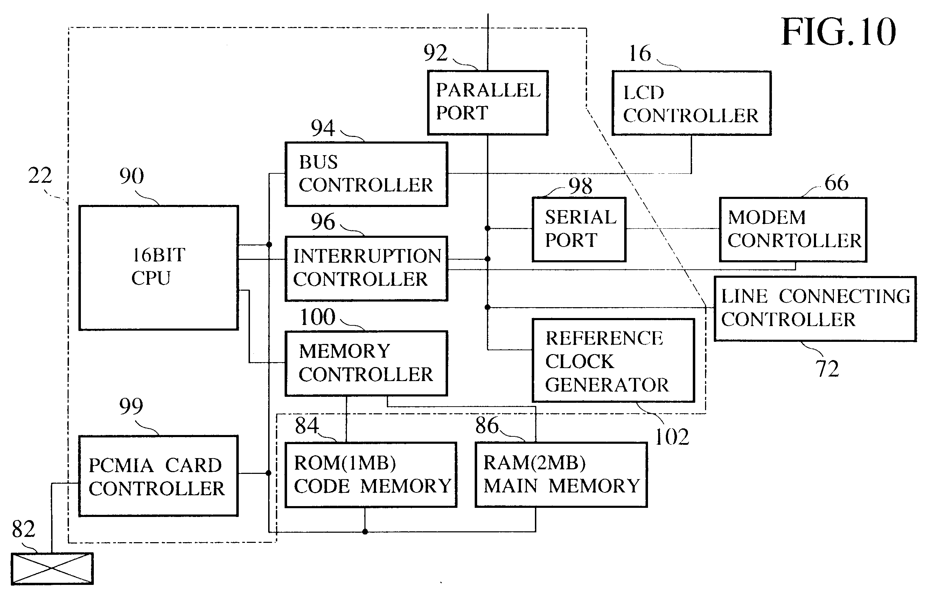

In such device, the writing communication operating section 22 has a structure as shown in FIG. 10 and is made an integrated circuit of 1 chip ( also called a microcomputer section ). The writing communication operating section 22 includes a CPU 90, a parallel port 92, a bus controller 94, an interruption controller 96, a bus serial port 98, a PCMCIA card controller 99, a memory controller 100, and a reference clock generator 102. The CPU 90 is preferably an Intel 8086 compatible of 16 bits, and the parallel port 92 converts the data of centronics-type from the touch panel controller 18 to put converted data on the system bus. The bus controller 94 decodes the status information on the system bus, outputs various commands on the result of decoding of the converted data, and controls an address bus and data bus, etc. The interruption controller 96 generates an interruption to change a stream a program according to an external factor. The serial port 98 performs a conversion of the data between the system bus and the modem controller 66 processing the serial data, and the PCMCIA card controller 99 is connected to the memory card socket 82. The memory controller 100 controls writing and reading of the data of the ROM 84 and the RAM 86. The reference clock generator 102 generates the reference clock to control these operations described above.

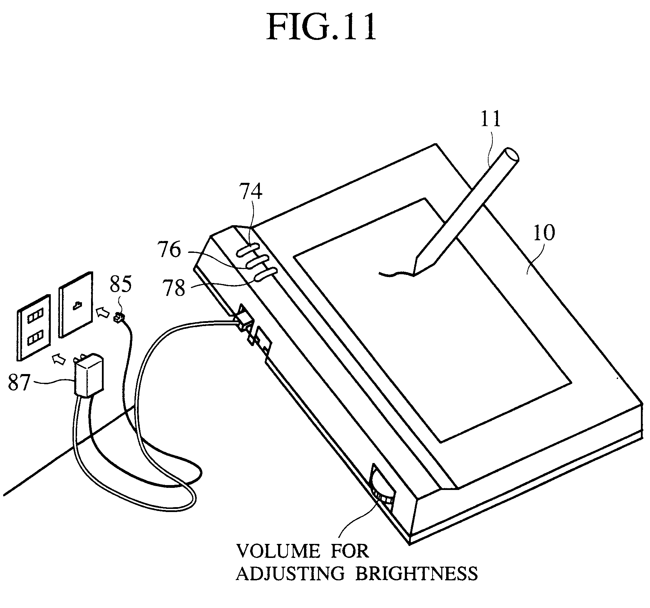

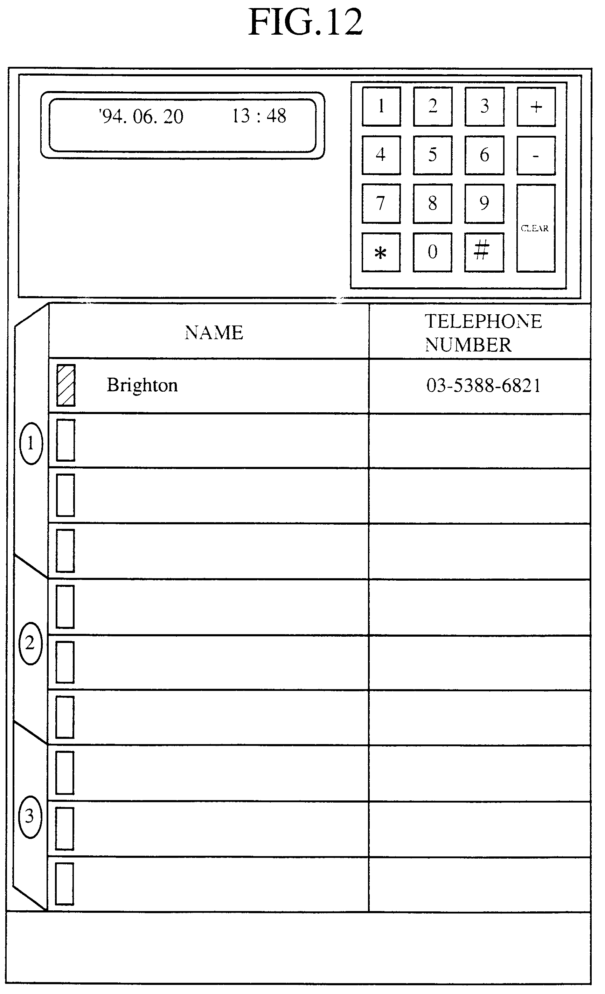

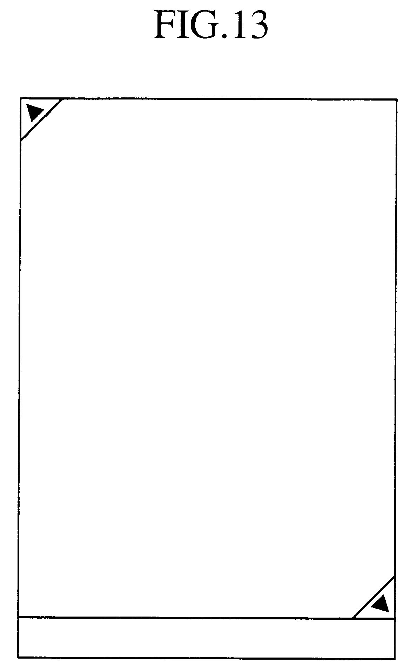

The description will now proceed to device 10 for communicating in writing structured described above in FIG. 9. FIG. 11 is a perspective view showing an example of a connection of the device 10 for communicating in writing in FIG. 9. In this example, the picture elements of the touch panel 14 are exposed by the back light 60. Further, in the LCD 12 of the display section 20, the calling screen as shown in FIG 12 is displayed. The telephone number is input thereto, and the writing conversation screen is displayed as shown in FIG. 13 after connecting the line with receiving party.

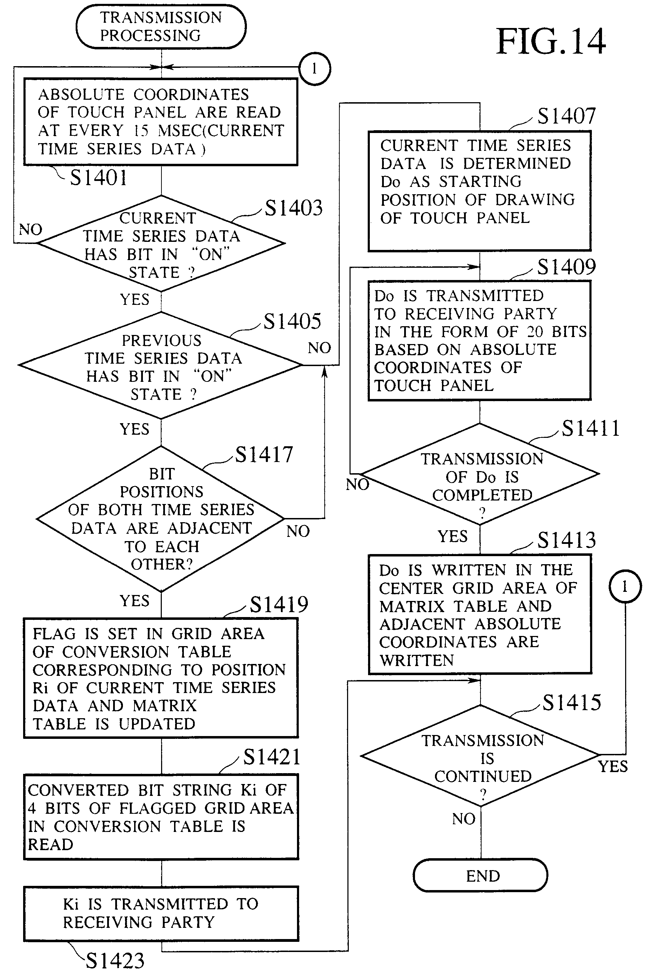

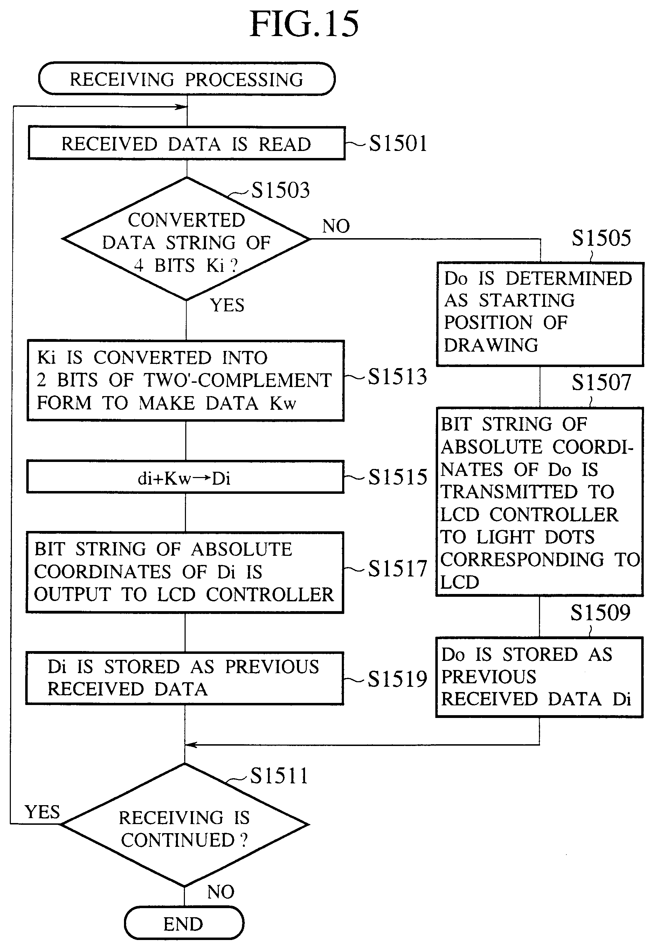

FIGS. 14 and 15 are flow charts explaining the transmitting data processing. The touch panel controller 18 scans every 15 msec the absolute coordinates axis of the touch panel 14, converts current absolute coordinates axis data ( hereinafter called current time series data ) to the data of the bus cycle of the centronics-type( 10 bits of an X-axis, 10 bits of a Y-axis ), and outputs the converted data to the writing communication operating section 22 (S1401). The writing communication operating section 22 receives these data at the parallel port 92 and outputs a bit string ( hereinafter called time series data ) of 20 bits consisting of 10 bits of the X-axis and 10 bits of the Y-axis to the system bus.

In addition, the interruption controller 96 outputs an interruption signal to the CPU 90 at every time when the time series data are output to the system bus.

The CPU 90, based on the adjacent determination software of the ROM 84, determines whether or not current time series data have a bit ( indicating current dot position ) in "on" state, when the interruption signal is input (S1403). The embodiment will now proceed to a start of a drawing by the stylus pen 11 on the touch pane 14.

When it is determined in Step S1403 that the time series data have a bit in "on" state, a determination is made whether or not previous time series data time have a bit in "on" state (S1407). This determination is, as shown in FIG. 1, made by comparing with a plurality of the absolute coordinates written in each grid area in the matrix table 36.

When the current time series data have a bit in "on" state in Step S1403 and the previous time series data do not have a bit in "on" state in step S1405, it is determined that the current time series data are the starting position **Do** following the drawing made by the stylus pen 11 on the touch panel 14 (S1407).

Thereafter, this starting position **Do** is transmitted to the serial port 98 as the bit string consisting of the X-axis of 10 bits and the Y-axis of 10 bits based on the absolute coordinates of the touch panel 14 (S1409). In this embodiment, the binary code signal which has the header-bit and 20 bits consisting of the X-axis 10 bits and the Y-axis 10 bits is transmitted as transmission data of the absolute coordinates following the drawing made by the stylus pen 11.

In a preferred embodiment, it is preferable that the this header-bit is made different from the first bit of the transmission data. For example, when the first bit is "1", the header-bit is set to "0".

Further, the absolute coordinates are output to the LCD controller 16 by the handwriting determining software of the writing communication operating section 22. Since the LCD 12 displays a picture element of 640×400 only, the picture element corresponding to the nearest position detected by the touch panel 14 is lighted by the LCD controller 16. In most cases, the lighted picture element is generally larger than a specified "point" detected on the touch panel 14.

Thereafter, a determination is made whether or not the starting position **Do** is completely transmitted (S1411). When the transmission of the starting position **Do** is completed, the starting position **Do** is written in the grid area of the center of the matrix table 36, and the adjacent absolute coordinates are also written in other grid areas of the matrix table 36 (S1413).

Next, a determination is made whether or not the transmission is continued (S1415). When the transmission is continued, the process goes back to Step S1401.

When it is determined in Step S1403 that the current time series data have a bit and the previous time series data have a bit in Step S1405, a determination is made whether or not both time series data are adjacent to each other (S1417). This adjacent determination is made whether or not the scanned new position is disposed at the right next to the stored position, that is, adjacent to the center of the absolute coordinates of the matrix table 36.

When it is determined in Step S1417 that they are adjacent to each other, a current bit position is written as the X-axis of 10 bits and the Y-axis 10 of bits to the grid area of the center of the matrix table 36 , and the matrix table 36 is updated in the same manner as illustrated in FIG. 1 (S1419).

Thereafter, a flag is set in the grid area of the conversion table 40 corresponding to the dot position **Ri** of the 20 bits ( the X-axis and the Y-axis ) based on the absolute coordinates of the touch panel 12 of the current time series data (S1419).

The 4 bits data in the grid area of the conversion table 40 ( hereinafter called a translation bit string **ki** ) is read (S1421) to output this translation bit string **ki** to the serial port 98( S1423 ), and the process goes back to Step S1415.

Description will now be made with regard to the receiving data processing. FIG. 15 is a flow chart explaining the receiving data processing. When the receiving party transmits the data via the serial line, the data are received at the communication control section 25, and the received data are output to the writing communication operating section 22. This received data is transmitted to the system bus by the serial port 98 of the writing communication operating section 22. The CPU 90, based on the handwritten determining software for receiving of the ROM 84, reads the received data (S1501) to determine whether or not the received data is the translation bit string **ki** of 4 bits (S1503).

Subsequently, when determined in Step S1503 it is not the translation bit string **ki**, the starting position **Do** following the drawing made by the stylus pen 11 is determined (S1505), and the bit string of the 10 bits of the starting position **Do** is converted into the bit string based on the resolution of the LCD and transmitted the converted bit string to the LCD controller 16 to light dots of the LCD 12 (S1507).

The 20 bits (X, Y) data of the starting position **DO** is stored as previous received data **di** (S1509). A determination is made whether or not the receiving is continued (S1511). When it is determined in Step S1511 that the receiving is continued, the process goes back to Step S1501.

When it is determined in Step S1503 the received data is the translation bit string **ki**, the translation bit string **ki** is converted into two's-complement form to make data **kw** (S1513). The previous receiving data **di** is added to the data **Kw** to make data **Di** of the 10 bits (S1515), and the data **Di** is output to the LCD controller 16 as the dot position **Di** of the absolute coordinates of the LCD 12 (S1517) to light the corresponding dots.

Thereafter, the 20 bits data is stored (S1519) as a previous receiving data, and the process goes back to Step S1511.

Namely, the received signal is analyzed, and it is determined whether or not the analyzed signal is the first dot position following the drawing. When it is the first dot position, the first dot position is output as a bit string based on the resolution of the LCD 12 , and stored as a previous dot position.

Now, the CPU is waiting for the next signal transmitted from the similar device. When the next received signal indicates a continuation, the previous dot position is added by two's-complement operation and output to the LCD 12.

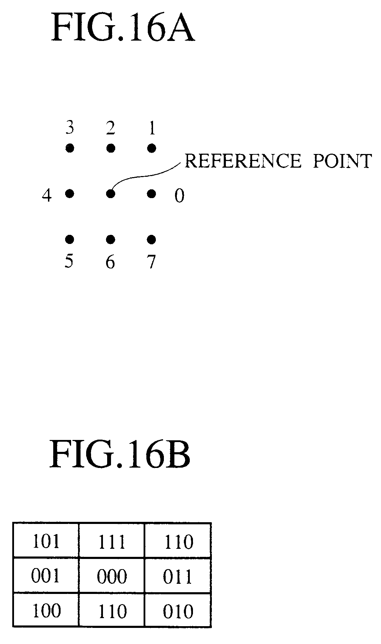

In the description as mentioned above, the deviation per 1 bit is converted into 4 bits to be transmitted to the receiving party, but it may be converted into 3 bits to be transmitted as shown in FIG. 16.

Referring to FIG. 16A, the deviation per 1 dot is 8 deviations with respect to the reference point. That is, when the position of the stylus pen 11 is the same as that of the previous time, it is adequate to have 8 kinds when the position is not transmitted.

Thereafter, the similar device of the receiving party is preset "when the position of the stylus pen 11 is the same as that of the previous time, the position will not be transmitted."

Therefore, the conversion table of 3 bits can be provided as shown in FIG. 16B. Accordingly, a high speed transmission is made possible.

According to the device of this invention, it is possible for people to communicate each other even if who have handicaps for hearing.

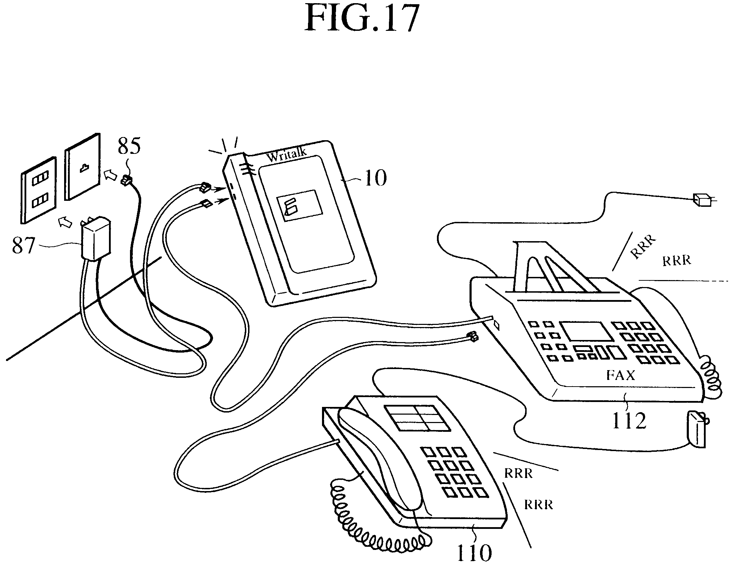

In addition, as shown in FIG. 17, a general telephone 110 and a facsimile machine 112 may be connected. In this connecting condition, the line connecting controller 72 controls the OPEN/CLOSE of each switch based on the line connecting software of the ROM 84 ( line connecting unit ).

For example, while a telephone call is not made by the device of this invention, the line switch B and the line switch C are put in the CLOSE condition, thereby making of a ringing call out of the telephone 110 or the facsimile machine 112 connected to the connector 70.

Further, in the writing communication operation section 22 as shown in FIG. 1, the signal line from the writing communication operation section 22 is connected between one side of the line switch **B** and the other side of the hook switch **A**. The line connecting software of this invention determines whether or not the call signal is transmitted from the signal line via the telephone line. When it is determined that the call signal is transmitted, the LED 76 is immediately made blinking. Wren the touch panel 14 is touched in this condition, the hook switch **A** is opened and put in the on-hook condition ( the condition when the receiver is picked up ) to receive the first signal from the receiving party.

When the connector 70 outputs a signal which informs a receiver of the telephone 110 is picked up, the hook switch A is closed to communicate with the receiving party by the telephone 110.

Namely, when the line is connected to the receiving party by the facsimile machine 112 or the telephone receiver 110, after the signal generated in the connector 70 of the facsimile machine 112 or the telephone 110 is detected, the local side is made in off-hook condition( the hook switch **A** OPEN ). When there is a handwriting instruction from this device, the device for communicating in writing at the local side is set in on-hook condition, and the connector 70 of the facsimile machine 112 or the telephone 110 is put in the electronically insulating condition.

Accordingly, when the facsimile machine 112, the telephone 110 or the communication in writing is switched-over, the line connecting to the receiving party is not be disconnected, and it is possible to have the audio communication or the communication in writing under the continuous communicating condition.

In addition, the device can be operated in an unattended mode. It is similar to the operating system of the audio answering machine. When a user is not attended near the device, the device can be set in " automatic answering" mode.

In the automatic answering mode, a proper message saying " I can not answer the phone, please leave a message " is sent to the receiving party, and a message from the receiving party is stored therein.

In addition, when the image displayed on the screen of this device from the receiving party is registered, it is possible to automatically transmit the registration in a sentence with respect to the communicating party. When the permission of retention is received from the communication party, it is possible to register it.

When the communicating party refuses the registration of the sentence, it is possible to display a message which means that the registration is not retained automatically to release the registration.

Further, in the above description, the resolution of the touch panel is set to 1024×1024, the resolution of the LCD is set to 640×400, and other resolutions of the touch panel and the LCD may be used.

Furthermore, in the above description, the data is converted into 20 bits length, and they may be converted into 8 bits, 16 bits, or 36 bits.

In addition, the stylus pen as the input pen or the touch panel may be a pressure type, an electromagnetic type or an electrostatic type.

### INDUSTRIAL APPLICABILITY

A device according to this invention is a portable type as described above, and it is possible to transmit in real time an image following a drawing made by an input pen to a receiving party. It is possible for peoples to transmit each other, especially when handicapped peoples who have the disadvantage of hearing and speaking communicate each other by writing a figure or a drawing, it is possible for the handicapped people each other to communicate with the same sense of the peoples. Therefore it is possible to communicate in writing between the handicapped people, effectively.

## Claims

1. A method for transmitting and receiving a hand-written image comprising the steps of:
converting a current dot position data at a pen point of X.Y axes in position input means placed on a display unit into a first bit string based on a resolution of said position input means;
determining whether or not said current dot position data and a previous dot position data are adjacent to each other;
directly transmitting said first bit string to a receiving party as a starting point of a drawing of said dot position data of this time when it is determined that both of said dot position data are not adjacent to each other;
determining a deviation per 1 bit between said previous dot position data and said current dot position data when it is determined that both of said dot position data are adjacent to each other, and converting the deviation into a second bit string having less than 4 bits to be transmitted to said receiving party; and
storing said current dot position data as the previous dot position data after said adjacent determining.

2. A method for transmitting and receiving a hand-written image as claimed in Claim 1 further comprising the steps of:
determining, when a data from a transmitting party is received, whether the data is data of said first bit string or data of said second bit string;
converting said data, when said data is determined as first bit string, into a third bit string based on the resolution of said display unit, and lighting dots corresponding to the X.Y axes of said display unit;
lighting dots of X.Y axes of said display unit corresponding to a bit string consisting of the second bit string and said third bit string of a previous time added together when it is determined that the data received is said second bit string; and
storing said third bit string or said bit string of said third bit string added to said second bit string as a previous dot position in said display unit.

3. A device for communicating in writing comprising:
a panel controller for reading position input means placed on a display units at every predetermined time, and converting a current dot position data at a pen point in X.Y axes into a first bit string based on a resolution of said position input means to be output;
a writing communication operating section for comparing a current dot position data with a previous dot position data output from said panel controller, and directly outputting said first bit string as a starting point of a drawing when both dot position data are not determined as adjacent to each other, and converting a deviation per 1 dot of both dot position data into a second bit string having less than 4 bits when the both dots are determined as adjacent to each other; and
a communication control section for communicating said first or said second bit string data according to a predetermined communication rules.

4. A device for communicating in writing as claimed in Claim 3, wherein said current dot position is stored as said previous dot position when the determination of said adjacency is completed.

5. A device for communicating in writing as claimed in Claim 3 or 4 further comprising:
a display unit controller for lighting dots of said display unit corresponding to the dot position at every time when dot position data of the X.Y axes of said display unit are input therein; and
a writing communication operating section for outputting dot position data converted into a third bit string based on the resolution of said display unit to said display unit controller when data received from said communication control section is determined as the data of said first bit string, making two's-complement operation with respect to the second bit string when the data is determined as said second bit string, and lighting the dots on the X.Y axes of said display unit corresponding to a bit string consisting of said third bit string of the previous time added to said bit string after two's-complement operation.

6. A device for communicating in writing as clamed in Claim 3, 4, or 5, wherein said third bit string or a bit string consisting of the third bit string with an addition of said second bit string after complement operation thereof is stored.

7. A device for communicating in writing as claimed in Claim 3, 4, 5, or 6, wherein said writing communication operating section comprises:
a matrix table having a grid area group consisting of three areas for an X-axis and three areas for a Y-axis;
a conversion table provided to be corresponding to said matrix table, having the center grid area being the reference point of 4 bits or 3 bits, and having the grid area group where positions of other grid areas with respect to the reference point are written in the form of the second bit string indicating 4 bits or 3 bits of said deviation per 1 dot;
dot position setting means for writing the dot position data as said first bit string to the grid area of the center of said matrix table at every time when said current dot position data is input, and writing adjacent coordinates of said current dot position data to other grid areas, and setting a flag in the grid area of said conversion table corresponding to said current dot position data;
adjacent determining means for determining the adjacency based on said current dot position data of said matrix table at each time when said current dot position data is input, and outputting said current dot position data in the form of said first bit string when said adjacency is not determined; and
dot coordinates output means for reading said second bit string in the grid area to be outputted at every time when said flag is set in said conversion table.

8. A device for communicating in writing as claimed in Claim 3, 4, 5, 6, or 7, wherein said writing communication operating section comprises a serial converting section for converting data transmitted to said communication control section into serial data.
